# EUROPÄISCHE PATENTSCHRIFT

(11) **EP 0 996 087 B1**
(45) Veröffentlichungstag und Bekanntmachung des Hinweises auf die Patenterteilung: **28.06.2006**
(21) Anmeldenummer: 99120763.0
(22) Anmeldetag: 20.10.1999
(51) Int. Cl.: G06K 19/077, B07C 5/344

(54) **Vorrichtung und Verfahren zur Bearbeitung einer Bahn, insbesondere eines Transponder-Streifens**
Device and method for manufacturing a track, namely a transponder strip
Appareil et procédé de fabrication d'une trace, nottament une bande pour un transpondeur

(30) Priorität: 22.10.1998 DE 19848716
(43) Veröffentlichungstag der Anmeldung: 26.04.2000
(73) Patentinhaber: bielomatik Leuze GmbH + Co. KG, 72639 Neuffen (DE)
(72) Erfinder: Bohn, Martin, 72762 Reutlingen (DE); Scheller, Wolfgang, 97241 Oberpleichfeld (DE)
(74) Vertreter: Patentanwälte Ruff, Wilhelm, Beier, Dauster & Partner

(56) Entgegenhaltungen:
- EP-A- 0 720 123
- DE-A- 19 632 795

## Beschreibung

Streifenförmige Bahnen können in Längsrichtung eine Vielzahl einteilig aneinander gereihter Bahnfelder gleicher oder unterschiedlicher Längserstreckung aufweisen. Der Streifen ist z.B. ein über alle Bahnfelder einteilig durchgehender, konstant dicker Trägerstreifen aus Kunststoff, wie Polyester, Papier o. dgl., der in jedem Bahnfeld nur teilweise lediglich ein- oder beidseitig mit einer über ihn vorstehenden Schicht oder Beschichtung konstanter Dicke und/oder mit einem vorstehenden Funktions- bzw. Steuerglied versehen ist. Die Dicke des transluzenten bis transparenten Trägerstreifens liegt unter einem Zehntel oder fünf Hundertstel Millimeter. Die Dicke der Schicht ist demgegenüber kleiner und die des Funktionsgliedes größer.

Die Trägerfolie ist elektrisch isolierend, die Schicht ist elektrisch leitend aus Metall, wie Kupfer oder Aluminium, und das Funktionsglied ist ein elektronischer Speicherchip von weniger als 10 mm oder 5 mm Kantenlänge. Dessen Polanschlüsse sind elektrisch leitend mit gesonderten Gegenanschlüssen der Schicht verbunden. Die Schicht bildet für den Siliciumchip bzw. integrierten Schaltkreis eine Antenne zum Empfangen und/oder Senden radiofrequenter Wellen. Sie werden durch die elektrische Schaltung der Einheit als kleine elektrische Ströme zum berührungsfreien Lesen bzw. Einschreiben der digitalisierten Informationen des elektronischen Speichers verwendet. Die Transponder-Einheit kann ohne Batterie bzw. Kondensator ausgebildet sein oder solche Funktionseinheiten in sehr flacher Bauweise im Rahmen der genannten Dicke umfassen. Transponder-Einheiten werden im Bereich der elektronischen Artikelsicherung, der Ursprungskennzeichnung und der gleichen verwendet. Sie eignen sich auch als Schicht-Bestandteil oder Zwischenschicht von anderen Kennzeichnungs- bzw. Berechtigungs-Stücken, wie Flugtickets, Kofferanhänger, Sicherheitspapiere, Paket-Lable, Chipkarten o. dgl. Die Schicht ist aufgedampft und auf fotochemischem Wege die Schaltungskonfiguration herausgeätzt bzw. aufgedruckt, wonach der Speicher bzw. das Silicium-Plättchen so befestigt wird, daß seine Kontaktstellen mit den elektrischen Verbindungsstellen der Antenne verbunden sind.

In einer solchen Bahn können unerwünschte Bahnfelder, nämlich Teilabschnitte oder fehlerhafte Transponder-Einheiten mehrfach enthalten sein, welche nicht gelesen oder beschrieben werden können und daher für die Weiterverarbeitung nicht geeignet sind. Es besteht daher das Bedürfnis, diese Teilabschnitte aus ihrer Feldanordnung in der Bahn auszuschleusen oder herauszunehmen, bevor die Bahn oder Bahnfelder in einen Kaschierverbund, wie Selbstklebematerial, oder in Substrate, wie Papier- bzw. Kunststofflaminat, eingearbeitet werden, um das Endprodukt zu schaffen. Letzteres ist dann eine aufgerollte oder zick-zack-förmig gestapelte Bahn, wie eine Etikettenbahn, eine Selbstklebebahn bzw. ein Papierlaminat. Endprodukt können auch vereinzelte Bögen mit jeweils mindestens einer Transponder-Einheit o. dgl. sein. Es ist denkbar, die unerwünschten Teilabschnitte erst im Endprodukt zu orten und aus diesem auszuschleusen. Bevorzugt jedoch werden sie schon vor Einarbeitung in das Endprodukt, nämlich aus der Bahn, ausgeschleust, so daß diese nur noch erwünschte Feldabschnitte als Bahnfelder und keine unerwünschten Teilabschnitte enthält. Eine solche "gereinigte" Bahn kann dann maschinell bzw. vollautomatisch zur Herstellung des Endproduktes eingearbeitet werden, ohne daß dieses unerwünschte Teilabschnitte enthält.

Die EP 0 720 123 A2 beschreibt den Aufbau und die Herstellung einer mehrschichtigen IC-Karte einschließlich der Bestückung der Karte mit elektronischen Bauteilen und ihrer Einbettung zwischen zwei Folienbahnen.

Die DE 196 32 795 A1 beschreibt ebenfalls das Lanimieren von Folienbahnen, die eine Kupferfolie und eine Kunststoff-Folie einschließen. Abweichungen der gegenseitigen Ausrichtungstoleranzen der Folienbahnen, die durch Sichtkontrolle festgestellt werden, werden durch Ziehen und Stoßen der Folienbahnen korrigiert, wobei zur Erleichterung dieses Vorganges in der Folienbahn nicht durchgängige Unterbrechungen angebracht werden können.

Der Erfindung liegt die Aufgabe zugrunde, eine Vorrichtung und ein Verfahren zu schaffen, mit welchem eine Bahn so verändert werden kann, daß zuvor in ihrem Feldraster enthaltene Teilabschnitte einer ersten Qualität im Feldraster durch Feldabschnitte einer zweiten Qualität ersetzt werden können. Insbesondere sollen fehlerhafte Transponder-Einheiten aus dem Feldraster so entfernt werden können, daß eine Bahn oder ein Streifen entsteht, welcher im Feldraster wesentlich weniger fehlerhafte Einheiten als zuvor oder nur noch fehlerfreie Einheiten enthält. Die Vorrichtung soll bevorzugt mit großer Geschwindigkeit bzw. halb- oder vollautomatisch arbeiten, einfach im Aufbau bzw. der Bedienung und hinsichtlich ihrer Arbeit gut zu kontrollieren sein.

Erfindungsgemäß weist die Vorrichtung die Merkmale des Anspruchs 1 auf. Sie besitzt einen Sockel oder ein stationäres Grundgestell mit einer Entfernungsstation auf, welche Mittel bzw. Werkzeuge zum Herausnehmen der unerwünschten Teilabschnitte aus der Feldanordnung und zur Aneinanderreihung zuvor größer beabstandeter, erwünschter Feldabschnitte mit einem geringeren Abstand umfaßt.

Der Teilabschnitt bleibt nicht im Verbund der Bahn, sondern wird aus der Bahn vollständig herausgetrennt. Dadurch entstehen in der Bahn bzw. Trägerschicht einander gegenüberliegende, zur Bahn-Längsrichtung rechtwinklige Trennkanten, welche einander überlappend oder stumpf aneinanderstoßend miteinander fest verbunden werden, um wieder eine durchgehende Bahn zu erhalten. Diese enthält dann nur noch erwünschte Festabschnitte und ist um die entfernten Teilabschnitte kürzer.

Nach dem Herausnehmen des jeweiligen Teilabschnittes erfolgt die unmittelbare gegenseitige Verbindung der zuvor beiderseits an diesen Teilabschnitt anschließenden Feldabschnitte in einer Fügestation durch Schweißen, Kleben o. dgl. Die Verbindung kann ohne oder mit Materialzugabe, beispielsweise einem Klebstreifen, erfolgen. Der Abstand der Fügestelle von der Trennstelle ist möglichst klein, so daß alle Teile der Bahn vor und nach dem Trennen stets nur in derselben Richtung und zur Aneinanderreihung über geringstmögliche Strecken zu bewegen sind. Vor und nach diesen beiden Stellen sowie vor und nach dem Trennen wird die Bahn zweckmäßig permanent nur durch Klemmung oder formschlüssigen Eingriff in eine Längslochung gesichert bzw. parallel zu ihrer Ebene und in ihrer Längsrichtung bewegt. Derselbe Transporteur kann sowohl zur Vorschubbewegung der ungetrennten Bahn als auch der Bahnenden beim gegenseitigen Annähern o. dgl. dienen.

Vorteilhaft ist ein Detektor vorgesehen, welcher während der Bewegung bzw. des Durchlaufes der ungetrennten Bahn deren Felder aus herauszunehmenden Teilabschnitten ortet, über geeignete Leitungen ein entsprechendes Signal an Steuermittel gibt, worauf diese die Ankunft des Teilabschnittes in der Entfernungsstation verfolgen und über Steuerleitungen Signale zum Heraustrennen bzw. Aneinanderreihen an motorische Antriebe dieser Station geben. Solche Antriebe sind gesondert für die Trennwerkzeuge, die Fügewerkzeuge und jeden der Transporteure beiderseits der Trenn- bzw. Fügestelle vorgesehen und daher auch unabhängig voneinander steuerbar. Die Steuermittel koordinieren jedoch alle diese Antriebe vollautomatisch. Z.B. so, daß aufeinanderfolgend der Bahntransport bei Ankunft der vorauseilenden Trennzone des Teilabschnittes in der Trennebene angehalten, eine erste Trennung durchgeführt, beide getrennten Bahnenden gemeinsam oder nacheinander bis zur Ankunft der nacheilenden Trennzone in der Trennebene weiterbewegt, der zweite Trennschnitt ausgeführt, der so freigetrennte Teilabschnitt aus der Bahnebene ausgeschleust, das stromaufwärtige Bahnende dem stationären anderen Bahnende bis zum Stoß oder bis zur Überlappung angenähert, dann wieder festgesetzt, die Verbindung der in der Fügeebene stationär aneinanderschließenden Bahnenden hergestellt und schließlich beide so aneinander gereihten Bahnenden gleichlaufend weiterbewegt werden, bis bei Ankunft des nächsten unerwünschten Teilabschnittes dieser Arbeitszyklus wiederholt wird. Der Sensor zur Erfassung der Teilabschnitte liegt stromaufwärts unmittelbar benachbart zur Arbeitsebene der Entfernungsstation bzw. zur zugehörigen Klemm- oder Eingriffsebene des Transporteuers. Auch stromabwärts davon kann ein solcher Sensor zur Nachkontrolle nach der Aneinanderreihung der Feldabschnitte vorgesehen sein.

Insbesondere wenn die Bahn mit nicht horizontaler bzw. mit vertikaler Längsmittelebene bearbeitet wird, ist es zweckmäßig, sie unmittelbar vor dem Einlauf in die genannten Stationen und/oder nach dem Auslauf daraus seitlich genau sowie dynamisch gegenüber dem Sockel auszurichten. Hierzu ist für die Bahn eine Umlenkung geeignet, welche quer zu deren Längsrichtung und parallel zur Bahnebene bzw. parallel zu ihrer Umlenkachse Ausrichtbewegungen ausführen kann, die von einem die Ausrichtung der Bahn erfassenden Sensor gesteuert sind. Bei nicht vertikaler, beispielsweise horizontaler Längsmittelebene der Bahn kann für deren Ausrichtung ihre Gewichtskraft genügen, indem sie an einem unter ihr liegenden Kantenleitfläche gleitend ausgerichtet wird.

Die genannten Stationen sind zwischen zwei Bahnspeichern angeordnet. Sie sind unabhängig voneinander so antreibbar, daß die Bahn vom einen Speicher abgerollt, durch die genannte Bearbeitung hindurchgeführt und dann auf dem anderen Speicher wieder aufgerollt oder in Zick-Zack-Lage abgelegt wird. Stromabwärts vom Abgabespeicher bzw. stromaufwärts vom Aufnahmespeicher ist ein Pufferspeicher für die Bahn angeordnet. Er kann in Abhängigkeit von der Zugspannung der Bahn unabhängig vom benachbarten angetriebenen Speicher Bahnlänge abgeben oder aufnehmen. Zweckmäßig sind die genannten Stationen in einer vormontierten Baugruppe vorgesehen. Sie ist als Ganzes und unabhängig von den Speichern bzw. von der Bahnkantenregelung und den Pufferspeichern am Sockel zu befestigen und von diesem zerstörungsfrei wieder zunehmen. Der Sockel weist nur eine Seitenwange auf. An deren Vorderseite liegen die Bearbeitungsstationen, die Speicher und die zugehörigen Umlenkungen frei, ggf. mit fliegend gelagerten Wellen. So kann die Bahn beiderseits der Bearbeitungsstation bzw. über ihre gesamte Länge parallel zu ihren zugehörigen Umlenkachsen in die Vorrichtung eingesetzt und auch wieder aus ihr herausgenommen werden.

Zur Steuerung der Bahn, ihrer Enden und Bahnfelder, insbesondere zu deren Fixierung an und zu deren Ablösung von den Werkzeugen ist eine Fluidsteuerung vorgesehen. Sie kann Saug-und Blasöffnungen zum Ansaugen bzw. Abstoßen der genannten Bahnteile umfassen. Dadurch kann auch besser vermieden werden, daß herausgetrennte Teilabschnitte der Bahn mit dieser weiterlaufen anstatt von ihr weg auf zunehmend größere Entfernung bewegt zu werden.

Ein erfindungsgemäßes Verfahren ist in Anspruch 12 definiert.

Nach dem erfindungsgemäßen Verfahren wird also der unerwünschte Teilabschnitt aus seiner Feldanordnung entfernt oder herausbewegt, wonach die zuvor an ihn anschließenden Feldabschnitte unter Verkürzung der Bahn unabhängig von der Vorrichtung fest bzw. unlösbar miteinander fluchtend verbunden werden. Bevorzugt wird davor die Bahn im Durchlauf so abgetastet, daß der Teilabschnitt rechtzeitig vor Erreichen der Bearbeitungsstation erkannt und ggf. entsprechend markiert werden kann.

Bei einer minimalen Breite der Bahn von 30 mm bzw. 48 mm und einer maximalen Breite von 200 mm oder 160 mm werden vorteilhaft gemäß der Erfindung Bahnrollen von mindestens 150 mm oder 200 mm bzw. höchstens 700 mm oder 500 mm Durchmesser hergestellt. Die Vorrichtung könnte auch manuell antreibbar, beispielsweise eine Zange mit den genannten Werkzeugen sein. Die Taktzeit für einen Arbeitszyklus, nämlich Festsetzen, Ausschneiden, Aneinanderreihen und Verbinden, kann höchstens 30 oder 20 Sekunden und mindestens 5 oder 10 Sekunden betragen. Dabei erfolgt die Verbindung der Bahnenden mit hoher Pressung, um bei mehrlagiger Verbindungszone deren Dicke möglichst an die Ausgangsdicke der Bahn durch Verdichtung oder Schmelzfließen anzunähern.

Diese und weitere Merkmale der Erfindung gehen auch aus der Beschreibung und den Zeichnungen hervor, wobei die einzelnen Merkmale jeweils für sich allein oder zu mehreren bei einer Ausführungsform der Erfindung und auf anderen Gebieten verwirklicht sein und vorteilhafte Ausführungen darstellen können.

Ausführungsbeispiele der Erfindung sind in den Zeichnungen dargestellt und werden im folgenden näher erläutert. In den Zeichnungen zeigen:
- Fig. 1: einen Längsabschnitt einer zu bearbeitenden Bahn, nämlich eines Transponder-Streifens, in Ansicht,
- Fig. 2: die Aufeinanderfolge der Arbeitsschritte nach dem erfindungsgemäßen Verfahren in Ansicht,
- Fig. 3: die Aufeinanderfolge gemäß Fig. 2 im Querschnitt durch die Bahn,
- Fig. 4: einen Ausschnitt einer erfindungsgemäßen Vorrichtung mit horizontalen Umlenkungen,
- Fig. 5: ein Ausführungsbeispiel der Vorrichtung mit vertikalen Umlenkungen,
- Fig. 6: die Entfernungs- oder Arbeitsstation der Vorrichtung gemäß Fig. 4 bzw. 5 im Querschnitt parallel zu deren Zeichnungsebene und in vergrößerter Darstellung,
- Fig. 7: die Trennstation der Einheit gemäß Fig. 6 in Laufrichtung gesehen, wobei links und rechts unterschiedliche Ausbildungen dargestellt sind,
- Fig. 8: die Fügestation der Einheit gemäß Fig. 6 in einer Darstellung entsprechend Fig. 7 und
- Fig. 9: einen Ausschnitt der Fig. 6 in vergrößerter Darstellung.

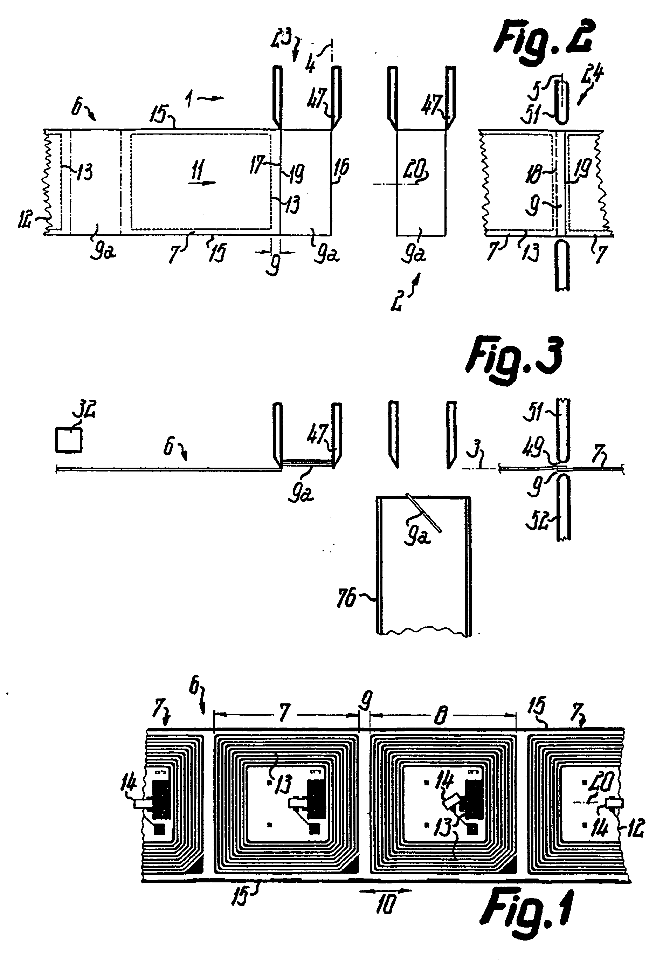

Die Vorrichtung 1 umfaßt eine Station 2 mit einer durchgehend horizontalen oder vertikalen Bahn- bzw. Arbeitsebene 3. Zu ihr rechtwinklig bildet die Station 2 eine Trennebene 4 und unmittelbar benachbart dazu eine Fügeebene 5, welche rechtwinklig zur Längsrichtung der zu bearbeitenden Bahn 6 liegen. Diese ist gemäß den Figuren 1 bis 3 ein Streifen 6, welcher nur in seiner Längsrichtung 10 aneinanderschließende Bahnfelder, nämlich in Richtung 10 gleich große Feld- und Teilabschnitte 7, 8 sowie diese verbindende, kürzere Zwischenabschnitte 9 umfaßt. Jeder Abschnitt 7, 8 stellt eine gleiche Transponder-Einheit dar, jedoch sind die Abschnitte 7 fehlerfrei und die Abschnitte 8 fehlerhaft und daher mit der Vorrichtung 1 aus der Bahn 6 so auszuscheiden, daß danach wieder eine durchgehende Bahn mit nur fehlerfreien Abschnitten 7 gebildet ist. Die Bahn 6 wird dabei parallel zu ihrer Ebene 3 und ihrer Längsrichtung 10 nur in einer einzigen Richtung 11 bewegt, nämlich während des Erfassens der Abschnitte 8 kontinuierlich und für die Bearbeitungen in den Ebene 4, 5 schrittweise.

Die Bahn 6 weist eine über ihre Länge einteilig durchgehende Grundbahn 12 als Trägerschicht auf. Sie ist höchstens 160 mm und mindestens 48 mm breit. Jeder Abschnitt 7, 8 entspricht in Richtung 10 der Erstreckung einer auf eine oder beide Großflächen der Bahn 12 aufgebrachten Schicht 13. Der Zwischenabschnitt 9 entspricht in Richtung 10 dem Abstand zwischen benachbarten schichten 13. Alle Abschnitte 7, 8 haben in Richtung 10 gleiche Erstreckung und alle Abschnitte 9 demgegenüber kleinere, jedoch ebenfalls gleiche Erstrekkung. Die Schicht 13 bildet in einer Ringzone eine rechteckig spiralförmige Antennenschicht und im unbeschichteten Ringzentrum zwei benachbarte Pole zum Anschluß an die Gegenkontakte eines Chips 14. Er wird durch die Antenne mit elektrischem Strom versorgt sowie mit digitalisierten Informationen beschrieben und kann letzere berührungsfrei an einen Empfänger senden. Bei der Bestückung mit den Chips 14 treten in einzelnen Einheiten 8 Fehler hinsichtlich der genannten Funtionen auf. Diese Abschnitte 8 werden als Ausschuß entfernt. Die Schichten 13 reichen nahe bis an die durchgehend parallelen Seitenkanten 15 der Bahn 6, welche durch die Bahn 12 gebildet sind. Die Schichten 13 haben von den Kanten 15 gleiche Abstände, die kleiner als die Breite des Abschnittes 9 in Richtung 10 ist.

Zum Ausscheiden wird kurz hinter der Mitte des dem Abschnitt 8 unmittelbar vorauseilenden Abschnittes 9 in der Ebene 4 ein erster Trennschnitt durchgeführt. So bildet die Bahn 12 zwei einander in derselben Ebene gegenüberliegende Bahnenden 16, 18 gemäß Fig. 2. Das stromabwärtige Bahnende 18 wird dann in Richtung 11 motorisch bis in seine Fügeposition in der Ebene 5 bewegt und festgesetzt. Dann wird das stromaufwärtige Ende 16 quer zur Ebene 3 motorisch parallel verlagert und danach in Richtung 11 motorisch bewegt, bis der nacheilend an den Abschnitt 8 anschließende Abschnitt 9 kurz vor seiner Mitte in der Trennebene 4 liegt. Hierbei wird der Abschnitt 8 quer zur Ebene 3 während des Antriebes in Richtung 11 umgelenkt und so von der Ebene 3 entfernt. Folgen zwei oder mehr Abschnitte 8 aufeinander, so wird ein entsprechend Vielfaches dieses Vorschubes in Richtung 11 ausgeführt. Das Bahnende 16 wird dann gegenüber der Ebene 4 festgesetzt und der Schnitt in der Mitte des nacheilenden Abschnittes 9 ausgeführt. So ist der Abschnitt 8 vollständig aus der Bahn 6 herausgetrennt. Er wird unmittelbar anschließend von der Ebene 3 weg abgefördert, z.B. abgesaugt.

Das Bahnende 16 wird dann im Bereich der Ebene 4 durch Blasluft o. dgl. berührungsfrei angehoben und in diesem Zustand motorisch in Richtung 11 gefördert, bis es in der Ebene 5 das immer noch fixierte Ende 18 auf einer Breite von 1 mm bis 2 mm überdeckt, die kleiner als die Breite des Abschnittes 9 ist. Dann wird auch das Bahnende 16 gegenüber der Ebene 5 festgesetzt. Die beiden einander überlappenden Enden werden unter Erwärmung und Druck zugabefrei thermoplastisch aneinander befestigt, nämlich verschweißt. Die Heizzeit für die Schweißung beträgt etwa 2 bis 3 Sekunden und die Haltezeit, während welcher die Schweißung unter Aufrechterhalten des Preßdruckes quer zur Ebene 3 abkühlt und aushärtet, beträgt 8 bis 10 Sekunden und kann durch Kühlung, z.B. mit Blasluft, verkürzt werden. Durch den thermischen Preßvorgang wird die Dicke der doppellagigen Verbindung reduziert, z.B. auf die Dicke der anschließenden Abschnitte der Bahn 12 oder die Gesamtdicke der Schichten 12, 13. Nach Ablauf der Haltezeit wird der Preßdruck aufgehoben. Dann wird die Bahn 6 auch im Bereich der Ebene 5 in der beschriebenen Weise in einen berührungsfreien Zustand auf einem Luftkissen o. dgl. überführt. Dann wird die Bahn 6 einschließlich der hergestellten Verbindung beiderseits und zwischen den Ebenen 4, 5 in Richtung 11 mit einer Geschwindigkeit transportiert, die wesentlich höher ist als beim Überführen in den zweiten Trennschnitt und in die Fügeposition.

Sobald das nächste Feld 8 in den Bereich der Station 2 gelangt, wird derselbe Arbeitszyklus zur Ausschleusung wiederholt, nämlich bis das Band 6 über seine gesamte Länge nur noch aus Feldern 7 zusammengesetzt ist. Zur berührungsfreien Erkennung der Felder 8 ist stromaufwärts unmittelbar benachbart zur Ebene 4 ein Sensor 32 vorgesehen, beispielsweise ein Scanner- oder Lesekopf für den Chip 14. Der Sensor 32 erfaßt den Abschnitt 8 während dessen Durchlaufes in Richtung 11 mit der höheren Geschwindigkeit, gibt diese Erfassung an eine Steuereinrichtung weiter, wonach diese vollautomatisch den genannten Arbeitszyklus, nämlich jeden der genannten Transport- und Bearbeitungsschritte, über geeignete Antriebe steuert.

Sind gemäß den Figuren 2 und 3 die Abstände zwischen benachbarten Schichten 13 bzw. die Breiten der Abschnitte 9, 9a verhältnismäßig groß, so können in der Trennstation 23 in einer einzigen Arbeitsbewegung auch zwei parallele Trennschnitte ausgeführt werden, um einen mit Abstand zwischen diesen Schichten 13 liegenden Streifen 9a auf einmal herauszutrennen und quer zur Ebene 3 auszuschleusen. Danach wird anstatt wie oben beschrieben, zwischen den Bahnenden 16, 18 nunmehr zwischen den so entstandenen Bahnenden 19, 18 in der oben beschriebenen Weise die Verbindung ebenfalls so hergestellt, daß sie im Abstand von beiden benachbarten Schichten 13 liegt. Nach dem doppelten Trennschnitt, welcher am Abschnitt 9a die Querkanten 16, 17 bildet, kann letzterer bei festgesetztem Bahnende 19 zuerst in der Ebene 3 in Richtung 11 bewegt und dann zwischen den Ebenen 4, 5 quer zur Ebene 3 abgefördert werden, z.B. in einen Schacht 76, durch welchen Saugluft strömt. Das gleiche gilt auch für auszuschleusende Abschnitte 8, welche in der beschriebenen Weise durch zwei Doppelschnitte herausgetrennt. Dann werden jeweils zwei Abschnitte 9a und von diesen abgetrennt der oder die dazwischen liegenden Abschnitte 8 aufeinander folgend quer zur Ebene 3 abgefördert. In jedem Fall werden alle Abstände zwischen benachbarten Abschnitten 7 über die gesamte Länge der Bahn 6 unter deren Verkürzung verringert. Das ist für die spätere Weiterverarbeitung der Bahn 6 bzw. die spätere Vereinzelung der Abschnitte 7 zweckmäßig. Die auszuschleusenden Abschnitte können auch durch Druckluft oder eine entsprechende Förderkraft quer zur Ebene 3 abgefördert werden.

Vor, zwischen und nach den Ebenen 4, 5 werden alle Teile der Bahn, seien sie unmittelbar verbunden oder für eine folgende Verbindung getrennt, in derselben, zu ihr rechtwinkligen Längsmittelebene 20 der Bahn 6 gehalten bzw. gefördert. Gemäß Fig. 4 weist die Vorrichtung 1 an einem stationären Sockel 21 Mittel 22 mit den Stationen 2 bzw. 23, 24 und beiderseits davon Speicher 25, 26 auf. Vom Speicher 25 wird die einlagige Bahn 6 abgezogen und unter mehrfacher entgegengesetzter Querumlenkung stromaufwärts der Mittel 22 in deren Ebene 3 überführt. Solange die Bahn 6 ungetrennt bzw. nach Trennung wieder verbunden ist, verbleibt sie unter Zugspannung in dieser Ebene 3 bis stromabwärts der Mittel 22, wo sie unter mehrfacher Querumlenkung vom Speicher 26 aufgenommen bzw. in diesen straff eingezogen wird. Auch vom jeweiligen Speicher bis zur Ebene 3 bzw. bis unmittelbar benachbart zu den voneinander abgekehrten Seiten der Ebenen 4, 5 bleibt die Bahn 6 während ihrer Bearbeitung stets unter Zugspannung straff gespannt.

Stromaufwärts und stromabwärts an die Mittel 22 bzw. den Bahnverlauf in der Ebene 3 unmittelbar anschließend sind Ausrichter 27, 28 zur seitlichen Ausrichtung der Bahn 6 gegenüber der Mittelebene 20 der Vorrichtung 1 vorgesehen. Für diese Bahnkantenregelung weist jeder Ausrichter zwei hintereinander liegende Umlenkungen auf. An ihnen ist die Bahn 6 jeweils über einen Bogenwinkel von höchstens 100° oder 90° umgelenkt. Zwischen den Umlenkungen läuft sie parallel zur Ebene 3, jedoch zwischen dieser und dem zugehörigen Speicher 25, 26. Die Umlenkungen sind an einem Gestell gelagert. Es ragt in Laufrichtung 11 der Bahn 6 von einem Drehgelenk frei aus. So führt die stromabwärtige Umlenkung bei Drehbewegungen mit der Bahn 6 quer zur Richtung 10 und parallel zur Ebene 3 gerichtete Lenkbewegungen für die genannte Ausrichtung aus. Stromabwärts des Ausrichters 27 bzw. 28 ist jeweils ein Sensor 29 vorgesehen, welcher die Seitenausrichtung der Bahn 6 erfaßt und einen entsprechenden motorischen Antrieb für die Querbewegung des Ausrichters steuert.

Die Mittel 22 sind zu einer vormontierten Einheit 30 zusammengefaßt, welche zerstörungsfrei abnehmbar am Sockel 21 befestigt ist, nämlich etwa in dessen zwischen den Speichern 25, 26 liegenden, zur Ebene 3 und Richtung 11 rechtwinkligen Mittelebene 31. Der Sockel 21 kann spiegelsymmetrisch zu dieser Ebene 31 ausgebildet sein. Ein Sensor 33 mit den anhand des Sensors 32 beschriebenen Funktionen kann auch stromabwärts der Ebene 5 wie der Sensor 32 an der Einheit 30 vorgesehen sein. Zwischen jedem Speicher und der durch die Einheit 30 gebildeten Station 2 bzw. dem zugehörigen Ausrichter 27 bzw. 28 ist ein Pufferspeicher 34 für die Bahn 6 vorgesehen. Er weist eine federnd gegen die Bahn 6 anliegende Umlenkung 35 auf, von welcher die Bahn bis zum zugehörigen Speicher 25 bzw. 26 berührungsfrei bzw. geradlinig verläuft. Jeder Speicher 25 bzw. 26 kann die Bahn 6 zick-zack-förmig gefaltet oder als Rolle 40 aufnehmen. Die in Höhe der Ausrichter 27, 28 liegenden Umlenkungen 35 beider Speicher 34 sind in derselben Richtung quer zur Ebene 31 federbelastet um die Achse der jeweils zugehörigen Rolle 40 schwenkbar. Beim Abwickeln dreht der Speicher 25 in einer Richtung, die entgegengesetzt zur Drehrichtung des Speichers 26 beim Aufwickeln ist. So haben beide Rollen 40 gleiche Wickelrichtung. Von der jeweiligen Tänzerwalze 35 ist die in Richtung zur Station 2 laufende Bahn 6 jeweils über mindestens eine weitere Umlenkung 36 geführt. Auf jeder Seite der Station 2 liegt zwischen zwei Umlenkungen 36 der zugehörige Ausrichter 27 bzw. 28.

Jeder Speicher 25 bzw. 26 weist eine zur Ebene 20 rechtwinklige Welle 37 auf. Sie ragt vom Sockel 21 frei aus, so daß eine Hülse 38 axial aufgesteckt und mit ihr drehfest verbunden werden kann. Zur Verspannung der Hülse 38 ist die Welle 37 radial spreizbar. Die Hülse 38 dient als Wickelkern, an welchem die zugehörige Bahnrolle 40 festgelegt ist. Jeder Speicher 25, 26 weist zur Steuerung der Abgabe bzw. Aufnahme der Bahn 6 eine Steuereinheit 39 auf, welche die zugehörige Bahnbewegung bzw. die Drehung der Welle 37 des Speichers 25 elektromotorisch bremst und die des Speichers 26 antreibt. Dadurch ist eine Fördereinrichtung gebildet, welche die Bahn 6 mit vorbestimmter bzw. verstellbarer Zugspannung entlang einer Förderbahn vom einen Speicher zum anderen fördert.

Zusätzlich zu diesen, von der Einheit 30 gesonderten Fördermitteln weist der Förderer auch an der Einheit 30 einen Transporteur 41 auf, der die Bahn 6 nur in der Ebene 3 erfaßt. Dieser Transporteur 41 weist einen Vorförderer 42 auf, welcher unmittelbar benachbart stromaufwärts zur Ebene 4 und stromabwärts zum Sensor 32 liegt. Entsprechend unmittelbar benachbart liegt ein Nachförderer 43 stromabwärts der Ebene 5 und stromaufwärts des Sensors 33. Die Förderer 42, 43 oder andere, entsprechende Glieder, bilden auch Festsetzmittel, nämlich Klemmen zur Festsetzung des Bandes 6, insbesondere während dessen Bearbeitungen in den Ebenen 4, 5. Daher weist jeder Förderer 42 bzw. 43 zwei beiderseits der Ebene 3 liegende, den Transport- und Klemmspalt begrenzende Walzen 44, 45 auf. Die Walzen jedes Transporteurs liegen in einer gemeinsamen, zur Ebene 4, 5 parallelen Axialebene und jeweils eine Walze, wie die untere Walze 44, ist von einem motorischen Antrieb 46 unabhängig vom anderen Förderer angetrieben, während die andere zugehörige Walze 45 frei mitläuft.

Die Werkzeugeinheit zur Bahntrennung in der Ebene 4 umfaßt an einem Messerträger auswechselbar befestigt das Messer 47 und diesem auf der anderen Seite, nämlich der Unterseite der Ebene 3, gegenüberliegend ein Gegenwerkzeug 48, z.B. einen Amboß aus keramischem Werkstoff zur Ausführung eines Quetschschnittes. Die Werkzeugeinheit zum Fügen in der Ebene 5 bildet einen Preßspalt 49. Er ist auf der Seite des Messers 47 von einem Stempel 51 und auf der anderen Seite von einem stationären Gegenstempel 52 begrenzt. Die Werkzeuge 47, 48, 51 sind unabhängig voneinander jeweils mit einem gesonderten Antrieb 53, 54, 55, wie einem Fluid-Arbeitszylinder, rechtwinklig gegenüber der Ebene 3 hin- und hergehend bewegbar, um die Schnitt- bzw. die Preßbewegung auszuführen. Hierzu ist der jeweils zugehörige Werkzeugträger an der Kolbenstange befestigt. Das Zylindergehäuse des Antriebes ist gegenüber dem Sockel 21 bzw. Seitenwangen 56, 56a der Einheit 3 festgelegt ist.

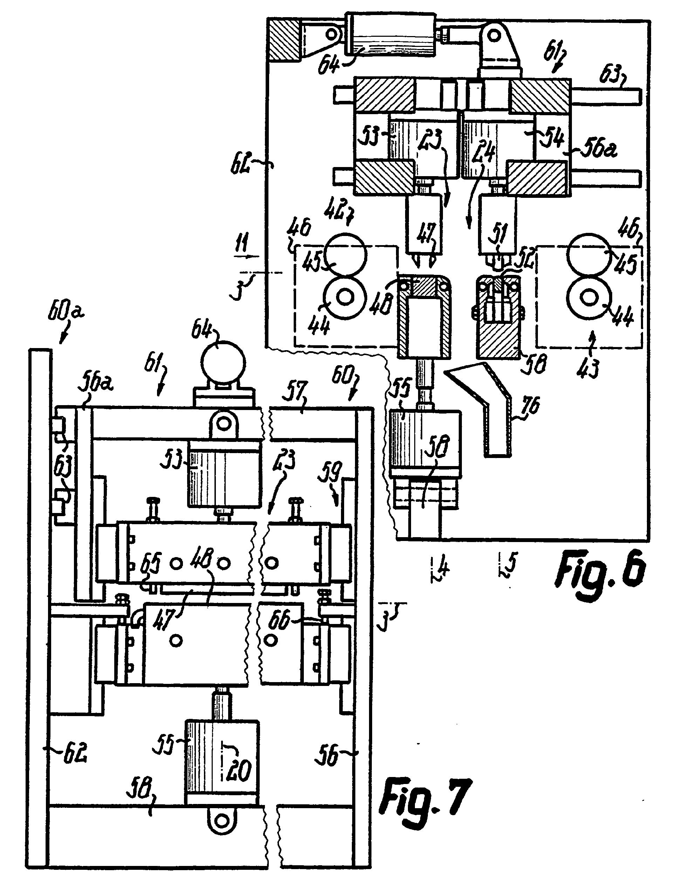

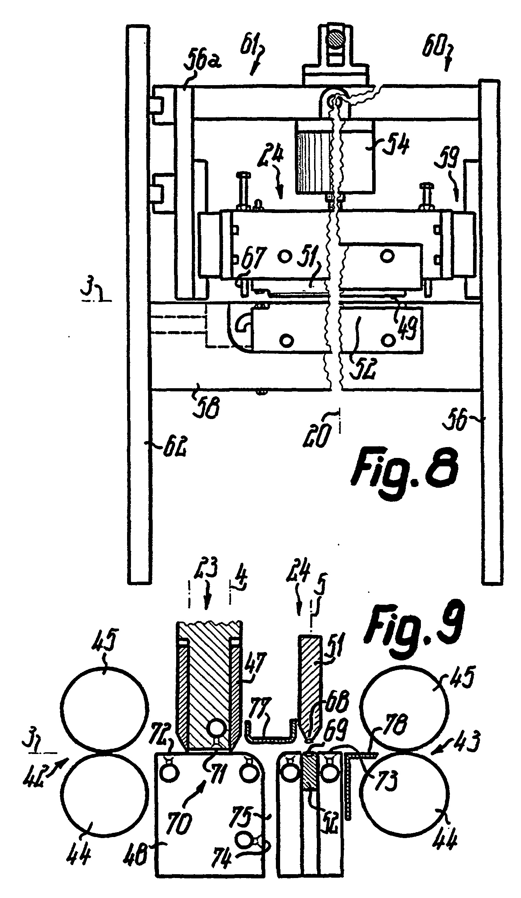

Fig. 6 zeigt die links in den Figuren 7 und 8 dargestellte Ausbildung, deren rechts dargestellte Ausbildung eine vereinfachte Ausführungsform ohne die anhand Fig. 2 beschriebene Ausschleusbewegung des Messers 47 ist. Jede dieser Ausführungsformen ist spiegelsymmetrisch zur Mittelebene 20 ausgebildet. Bei der rechts in den Figuren 7 und 8 dargestellten Ausführungsform liegen die Seitenwangen 56 beiderseits der Werkzeuge 47, 48, 51, 52 als äußerste Teile der Einheit 30. Die oberen Enden dieser Wangen 56 sind im Bereich jeder Station 23 bzw. 24 über eine Traverse 57 verbunden. Unter jeder Traverse 57 sind die Wangen 56 jeweils über eine weitere Traverse 58 starr verbunden, die in der Station 23 an den unteren Wangenenden und in der Station 24 mit Abstand darüber liegt. Für die Werkzeuge 47, 48 sind an den Wangen 56 einander gegenüberliegend lineare Führungen 59 vorgesehen, an welchen diese Werkzeuge rechtwinklig zur Ebene 3 verschoben werden können. Die Antriebe 53, 55 liegen an den voneinander abgekehrten Werkzeugseiten. Der Zylinder des Antriebes 53 ist am Holm 57 und derjenige des Antriebes 55 am Holm 58 festgelegt. Eine Führung 59 ist auch für das Werkzeug 51 vorgesehen. Das Werkzeug 52 ist fest an der zugehörigen Traverse 58 befestigt. Die Teile 56 bis 58 bilden ein starres Gestell 60, das mit der Außenseite einer Wange so gegen die Vorderseite des Sockels 21 zu verspannen ist, daß es von dieser Vorderseite frei absteht und die andere Wange 56 frei liegt.

Bei der links in den Figuren 7 und 8 dargestellten Ausführungsform bilden die Teile 56, 57 ein starres Gestell bzw. eine Einheit 61. Sie weist nur die Führung 59 für das Werkzeug 47 auf und ist mit diesem in und entgegen Richtung 11 gegenüber dem Sockel 21 bewegbar. Hierzu liegt an den voneinander abgekehrten Außenseiten der Wangen 56a jeweils eine weitere Wange 62, an deren Innenseiten der Wagen 61 hin-und hergehend linear verschiebbar ist. Die Wangen 56a sind nur über die Holme 57 miteinander verbunden. Der Wagen trägt entweder nur das Werkzeug 47 mit Antrieb 53 oder gemäß Fig. 8 auch das Werkzeug 51 mit dem Antrieb 54 und den zugehörigen Führungen 59. Dadurch macht entweder nur das Einzel- oder Doppelwerkzeug 47 oder auch das Werkzeug 51 die Bewegungen in und entgegen Richtung 11 mit. Der den Antrieb 55 und der das Werkzeug 52 tragende Holm 58 sind jeweils unmittelbar starr mit den Wangen 62 verbunden, welche auch die Führung 59 für das Werkzeug 48 unmittelbar aufweisen. Der Wagen 61 ist mit einem Antrieb 64, beispielsweise einem Fluid-Arbeitszylinder, an der Führung 63 gleitend bewegbar. Ein Ende des Antriebes ist an einer die Wangen 62 oberhalb des Wagens 61 starr verbindenden Traverse und das andere Ende an der Oberseite des Wagens 61 bzw. am Holm 57 angelenkt.

Für die Arbeitsbewegung des Werkzeuges 47 sind verstellbare Anschläge 65 vorgesehen. Sie liegen als festsetzbare Schrauben beiderseits benachbart zu den Enden des Werkzeuges 47 und haben als Gegenanschlag eine ebene Fortsetzung der Amboßfläche des Werkzeuges 48. Dadurch laufen die Schneiden der Messer 47 nur gerade bis zum Anschlag auf diese Amboßfläche, ohne jedoch beschädigt zu werden. Entsprechende Anschläge 66 sind auch für die zur Ebene 3 nächste bzw. in dieser liegende Hub-Endstellung des Werkzeuges 48, nämlich beiderseits dessen Enden, vorgesehen. Die Anschläge 65 sind im Träger des Werkzeuges 47 und die Anschläge 66 an Haltern verstellbar gelagert, welche an den Innenseiten der Wangen 56 bzw. 62 befestigt sind. Wiederum entsprechende verstellbare Anschläge 67 sind beiderseits benachbart zu den Enden des Werkzeuges 51 am zugehörigen Werkzeugträger vorgesehen und haben als Gegenfläche eine ebene Fortsetzung der Preßfläche des Gegenstempels 52. Dadurch kann die minimale Weite des Preßspaltes 49 und so die Dicke der Verbindung zwischen den Bahnenden 16, 18 bzw. 19, 18 festgelegt werden. Alle Anschläge sind stufenlos einstellbar und festsetzbar.

Wie die Messer 47 sind auch die Stempel 51, 52 am jeweils zugehörigen Werkzeugträger auswechselbar befestigt. Jedes der Werkzeuge 51, 52 enthält ein Heizglied 68 bzw. 69, wie eine elektrische Widerstandsheizung, welche die zugehörige Preßfläche bildet. Die Heizglieder sind über nicht näher dargestellte elektrische Leitungen an ein Steuerglied der Steuereinrichtung 50 angeschlossen, wobei die Leitungen für die Heizung 68 des bewegbaren Stempels 51 flexibel sind. Jede Preßfläche ist mit einer Antihraft-Beschichtung oder eine Folie z.B. aus Tetrafluorethylen versehen.

Es sind Haltemittel mit einer Fluidsteuerung 70 zur Festlegung einzelner Teil bzw. Abschnitte der Bahn an den Trägern der Werkzeuge 47, 48, 52 vorgesehen. Stromaufwärts vom Messer 47 oder der Ebene 4 bzw. zwischen den Schnittebenen des Doppelmessers 47 weist der zugehörige Träger an seiner dem Werkzeug 48 zugekehrten Fläche über die Arbeitsbreite eine Reihe von Öffnungen 71 auf. Diese Fläche des Trägers ist gegenüber den Schneiden der Messer 47 um ein Maß zurückversetzt, das nur geringfügig größer als die Dicke der Bahn 6 ist. In der Gegenfläche des Werkzeuges 48 ist sowohl stromaufwärts als auch stromabwärts vom Messer bzw. Doppelmesser 47 jeweils eine entsprechende Reihe von Öffnungen 72 vorgesehen. Die stromabwärtige Reihe mündet in einer Abrundung der stromabwärtigen Endkante dieser Gegenfläche, wobei die Abrundung an eine zur Ebene 3 rechtwinklige Fläche des Werkzeuges 48 anschließt. Im Bereich dieser Fläche ist eine weitere Reihe von Öffnungen 74 vorgesehen. Auch stromaufwärts und stromabwärts unmittelbar benachbart zur Preßfläche des Werkzeuges 52 ist in dessen auswechselbar am Träger 58 befestigten Halter für den Stempel 52 jeweils eine Reihe von Öffnungen 73 vorgesehen, welche die in der Ebene 3 liegende Fläche dieses Halters durchsetzen. Die Öffnungen jeder Reihe sind für sich an einen gemeinsamen Längskanal angeschlossen, der seinerseits über eine flexible und/oder starre Schlauch- bzw. Rohrleitung über geeignete Ventile, wie Magnetventile, an eine Saug- und Druckluftquelle angeschlossen ist. Die Ventile werden wie alle Antriebe unabhängig voneinander durch die Einrichtung 50 gesteuert.

Zwischen den Werkzeugen 48, 52, 58 ist ein Schacht 75 oder Spalt gebildet, welcher an die obere Öffnung des Schachtes 76 anschließt. Die Öffnung 74 kann auch nach oben gerichtet aus dem oder den Schächten 75, 76 nach unten absaugen. Zwischen den Werkzeugen 47, 51 ist eine Leitfläche 77 vorgesehen, um bei Austritt von Blasluft aus den Öffnungen 72, 73 oder aufgrund anderer Einwirkungen zu verhindern, daß Teile der Bahn 6 zwischen diese Werkzeuge nach oben bewegt werden. Zwischen dem Werkzeug 52 bzw. dem Halter 58 und dem Klemm-und Transportspalt des Förderers 43 kann in der Ebene 3 eine Tischfläche 78 zur gleitenden Abstützung der Bahn 6 vorgesehen sein.

Der Sockel 21 ist an seiner Vorderseite durch eine ebene Sockelwange 79 gebildet, über welche die Einheiten 25 bis 28, 30 sowie die Umlenkungen frei vorstehen. So wird die Bahn 6 unmittelbar benachbart zu, jedoch durchgehend mit Abstand von dieser Vorderseite bewegt. Über die Vorderseite steht auch ein Meßglied 80, wie eine die Bahn 6 umlenkende Walze vor. Mit ihr wird laufend die Zugspannung der Bahn 6 erfaßt und über eine Signalleitung an die Einrichtung 50 weitergegeben. Durch diese wird die Zugspannung der Bahn 6 auf einer oder beiden Seiten der Station 2 stets konstant gehalten. Der vom Speicher 25 ablaufende und der dem Speicher 26 zulaufende Bahnabschnitt wird mit einem ebenfalls über die Vorderseite des Sockels 21 frei vorstehenden Glied 81 von statischen bzw. elektrischen Aufladungen befreit. Der Entladestab 81 liegt stets berührungsfrei im Abstand von der Bahn. Dieser, ggf. sehr kleine, Abstand kann zur Anpassung an Durchmesseränderungen der Rolle 40 konstant gehalten werden, wenn das Glied 81 quer bewegbar, z.B. am Träger des Speichergliedes 35 angeordnet, ist und daher mit diesem quer zur Ebene 31 mitläuft.

In Fig. 4 ist die Station 23 mit nur einem einzigen Messer dargestellt. Diese Ausrüstung kann bei den übrigen Ausführungsformen dadurch erzielt werden, daß das stromaufwärtige Messer entfernt wird. Zur Bearbeitung wird eine Bahn 6 als Rolle 40 auf die Welle 37 des Speichers 25 von der Vorderseite der Vorrichtung 1 her axial aufgesetzt und gegenüber der Welle 37 verspannt. Das vordere Bahnende wird dann abgezogen, quer zu seiner Längsrichtung in Eingriff mit dem Ausrichter 27 sowie den beiderseits davon liegenden Umlenkungen 36 und den zugehörigen Zwischenspeicher 34 gebracht. Danach wird das Bahnende in Richtung 11 aufeinanderfolgend in den Sensor 32, den Förderer 42, die Schneid- und Preßspalte der Stationen 23, 24, den Förderer 43 und den Sensor 33 eingefädelt. Das nunmehr stromabwärts der Einheit 30 austretende Bahnende kann dann wieder quer in Eingriff mit dem Meßglied 80, dem Ausrichter 28 sowie den beiderseits davon liegenden Umlenkungen 36 und dem Speicher 34 gebracht werden. Auf die Welle 37 des Speichers 26 wird die Hülse 38 aus Karton o. dgl. aufgesetzt, verspannt und das Bahnende z.B. durch Wickelklemmung am Umfang der Hülse 38 fixiert.

Nunmehr kann die Vorrichtung 1 durch Betätigung eines Schalters in Betrieb genommen werden, in welchem sie die Bahn 6 im kontinuierlichen Durchlauf vom Speicher 25 abwickelt, sie mit der Einrichtung 27 seitlich gegenüber der Mittelebene 20 der Station 2 ausrichtet, mit dem Sensor 32 die Felder 8 von den Feldern 7 unterscheidet und bei Erfassung eines Feldes 8 so anhält, daß die Bahn 6 mit demjenigen Bereich in der Ebene 4 stehen bleibt, welcher zur Herstellung der Kanten 16, 18 vorgesehen ist. Diese Positionierung wird durch die Förderer 42, 43 gesteuert, welche, falls der genannte Bereich 16, 18 die Ebene 4 in Richtung 11 überlaufen hat, die Bahn auch entgegen Richtung 11 in Position überführen können. Nach dieser Positionierung werden die Öffnungen 72, 73 mit Saugluft beaufschlagt, so daß die Bahn 6 gegen die Amboßflächen der Werkzeuge 48, 52, 58 angesaugt und festgelegt wird. Über den Antrieb 53 führt dann das Messer 47 in der Ebene 3 den Schnitt aus. Danach bewegt der Förderer 43 das stromabwärts vom Schnitt liegende Bahnende in Richtung 11 soweit, daß die Kante 18 von der stromaufwärtigen Begrenzung der Preßflächen der Presse 24 noch erfaßt werden kann. Hierbei kann über die Öffnungen 72, 73 noch angesaugt werden, um das Bahnende 18 beim Gleiten über die Amboßflächen am Abheben zu hindern.

Der Antrieb 55 bewegt dann das Werkzeug 48 einschließlich des angesaugten Bahnendes 16 um einen kleinen Weg nach unten. Dann wird die Saugluft für die Öffnungen 72 abgeschaltet. Danach schiebt der Transporteur 42 das stromaufwärtige Bahnende 16 über die Schneidfläche des Werkzeuges 48 gegen die quer dazu liegende Fläche des Werkzeuges 52, 58 und lenkt es an dieser Fläche weg von der Ebene 3 nach unten unter Krümmung ab. Dies erfolgt solange, bis der dem nächstfolgenden Abschnitt 7 vorauseilende Abschnitt 9 die genannte Schnittposition in der Ebene 4 erreicht hat, also der oder die Abschnitte 8 nach unten in den Spalt 75 bzw. Schacht 76 ragen. Das Werkzeug 48 wird dann bis zum Anschlag wieder nach oben in die Ebene 3 gefahren. Danach schiebt und/oder zieht der Förderer 42, wie zuvor beschrieben, das Bahnende 16 in die genaue Schnittposition in der Ebene 4. Dann werden die Öffnungen 72 mit Saugluft beaufschlagt und dadurch wird dieses Bahnende am Werkzeug 48 festgelegt. Nunmehr wird in der zuvor beschriebenen Weise der zweite Schnitt mit dem Messer 47 ausgeführt, dadurch der Abschnitt 8 abgetrennt und mit der Öffnung 74 und durch den Schacht 76 abgesaugt bzw. entfernt. Hierbei kann die Saugluft für die stromabwärtigen Öffnungen 72, welche nur den Abschnitt 8 halten, abgeschaltet werden, während sie für die stromaufwärtigen Öffnungen 72 angeschaltet bleibt.

Danach werden die Öffnungen 72 auf beiden Seiten der Ebene 4 mit austretender Blasluft versorgt, so daß das stromaufwärtige Bahnende 16 bei abgehobenem Messer 47 auf einem Luftkissen berührungsfrei mit dem Förderer 42 in Richtung 11 geschoben werden kann, bis die Verbindungslage mit dem stromabwärtigen Bahnende 18 erreicht ist. Die Kante 16 bzw. 19 kann dann von der stromabwärtigen Begrenzung der Preßflächen der Presse 24 erfaßt werden. In dieser Lage werden dann die Bahnenden durch die Klemmwirkung der Förderer 42, 43 festgehalten. Nunmehr werden die stromaufwärtigen Öffnungen 73 mit Saugluft versorgt, so daß das stromaufwärtige Ende 16 an der Tischfläche des Werkzeuges 52, 58 festgelegt wird. Der Antrieb 54 fährt dann den Schweißbalken 51 gegen das Werkzeug 52, wodurch die Schweißverbindung hergestellt wird. Nach der Heiz- und der Haltezeit fährt der Antrieb 54 das Werkzeug 51 zurück in seine Öffnungslage.

Nun wird die Saugluft an den Öffnungen 73 abgeschaltet und statt dessen Blasluft zugeschaltet, so daß die Transporteure 42, 43 mit synchroner Geschwindigkeit die Bahn 6 in Richtung 11 in der oben beschriebenen Weise weiter transportieren. Während dieses Transportes sind also die Öffnungen 72, 73 mit Blasluft beaufschlagt, so daß die Bahn 6 durch die Werkzeugspalte der Stationen 23, 24 berührungsfrei gefördert werden kann, bis der nächste auszuschleusende Abschnitt 8 zu bearbeiten ist. Am Ende ist die Bahn 6 vom Speicher 25 auf den Speicher 26 umgerollt und enthält nunmehr keine Abschnitte 8 mehr. Alle genannten Bewegungen werden durch die Einrichtung 50 vollautomatisch gesteuert. Die Rolle 40 kann dann vom Speicher 26 mit der Hülse 38 abgenommen und eine weitere Bahn 6 in der beschriebenen Weise bearbeitet werden.

Bei Verwendung eines Doppelmessers 47, nämlich zum Ausschneiden der Abschnitte 9a, wird nach Ausführung des Schnittes durch die Öffnung 71 Luft angesaugt und daher der Abschnitt 9a zwischen den Messern 47 am zugehörigen Werkzeugträger festgehalten. Nachdem in der beschriebenen Weise der Transporteur 43 das stromabwärtige Ende 18 in die Station 24 überführt hat, fährt der Antrieb 64 das Werkzeug 47 mit dem Ausschnitt 9a in Richtung 11 über den Schacht 75, 76, die Öffnungen 71 werden von Saug- auf Blasluft umgeschaltet und dadurch wird der Abfall 9a vom Werkzeug 47 nach unten weggeblasen sowie von der Öffnung 74 in den Schacht 76 abgesaugt. Der Antrieb 64 fährt dann das Doppelmesser 47 zurück zur Schnittposition in der Ebene 4, wonach die Öffnungen 72 mit Blasluft beaufschlagt und das stromaufwärtige Ende 19 in der beschriebenen Weise in die Verbindungsposition in der Ebene 5 geschoben wird. Danach folgen die zuvor beschriebenen Arbeitsschritte für die Herstellung der Verbindung.

Soll im Falle des Ausschneidens von Abschnitten 9a ein Abschnitt 8 ausgeschleust werden, so wird in der beschriebenen Weise an dessen stromaufwärtigem Ende ein zweiter Doppel-Schnitt ausgeführt und erst danach die Verbindung hergestellt.

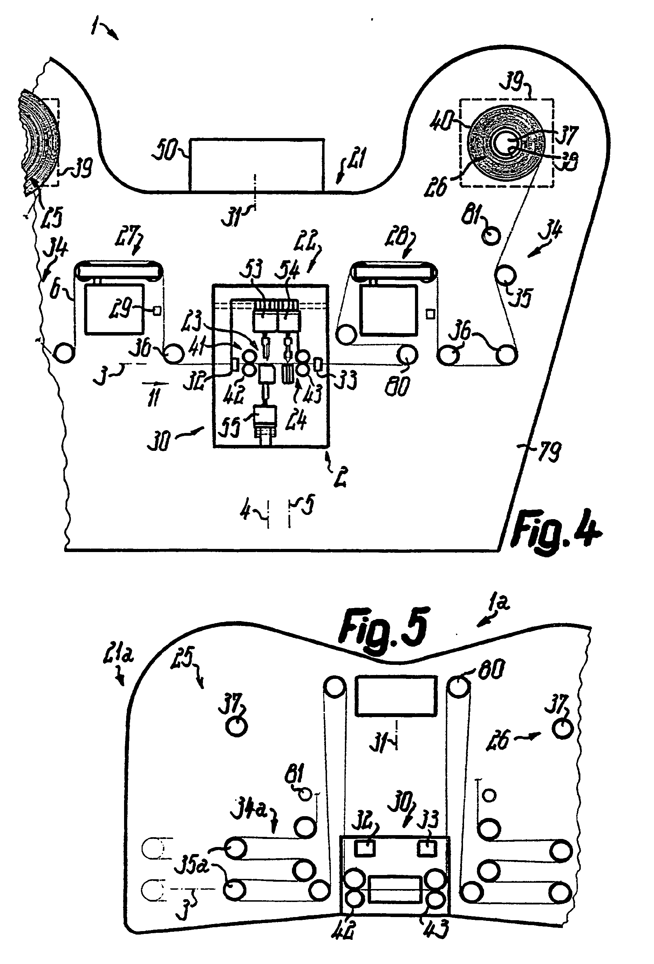

Während gemäß Fig. 4 die Umlenkungen für die Bahn 6 horizontal liegen und der Sockel 21 unten eine Standfläche bildet, sind sie gemäß Fig. 5 vertikal vorgesehen, da der Sockel 21 zur liegenden Abstützung mit seiner Rückseite auf einer Tischfläche ausgebildet ist. Die Tänzerwalzen 35a sind hier radial linear bewegbar. Jeder Speicher 34a weist zwei solche Tänzerwalzen 35a auf. Während gemäß Fig. 4 die Bahn 6 beiderseits über die Einheiten 30, 42, 43 hinaus in der Ebene 3 geführt wird, wird sie gemäß Fig. 5 an der Walze 45 jedes Transporteurs 42, 43 in der gleichen Richtung weg von den Werkzeugen 48, 52 über 90° umgelenkt, dann an weiteren Führungen über 180° zurück umgelenkt und dann unmittelbar benachbart zu den voneinander abgekehrten Seiten der Transporteure 42, 43 in entgegengesetzten Richtungen auf die Tänzerwalzen 35a umgelenkt. Die stromabwärts zum Transporteur 43 nächste Umlenkung bildet das Meßglied 80. Die Sensoren 32, 33 liegen zwischen den an die Transporteure 42, 43 anschließenden, zur Ebene 3 rechtwinkligen Bahnabschnitten. Ausrichter sind hier nicht erforderlich, da die Bahn 6 durch Gleiten an der ebenen Vorderseite des Sockels 21a auf eine konstante Lage ihrer Mittelebene 20 ausgerichtet wird. Dennoch können alle Merkmale jeder Ausführungsform bei jeder der weiteren Ausführungsform vorgesehen werden.

Alle Eigenschaften und Wirkungen können genau oder nur im wesentlichen bzw. etwa wie beschrieben vorgesehen sein oder, je nach den Erfordernissen, auch stärker davon abweichen. Die Maße der dargestellten Ausbildungen können besonders zweckmäßig sein, insbesondere für eine Bahn 6 von 54 mm Breite und einem maximalen Durchmesser der Rolle 40 von 600 mm.

## Patentansprüche

1. Vorrichtung (1) zur Bearbeitung einer Bahn (6) aus in einer Reihe von in Längsrichtung der Bahn aufeinanderfolgenden Bahnfeldern, die mindestens einen Teilabschnitt (8) und an diesen anschließend Feldabschnitte (7) enthalten, insbesondere eines Transponder-Streifens mit fehlerfreien Transponder-Einheiten als Feldabschnitte (7) und mindestens einer dazwischen liegenden fehlerhaften Transponder-Einheit als Teilabschnitt (8), wobei der Teilabschnitt (8) anschließend an einen Feldabschnitt (7) sowie parallel zur Bahn-Längserstreckung (10), als Teil dieser Erstreckung eine Kantenlänge definiert, wobei der eines der Bahnfelder bildende Teilabschnitt (8) aus seiner Feldanordnung entfernbar ist, **dadurch gekennzeichnet, daß** die Vorrichtung an einem Sockel (21) im Bereich einer Entfernungsstation (2) Steuer- bzw. Antriebsmittel zur Entfernung des Teilabschnittes (8) aus der Feldanordnung und Mittel (24) zum dauerhaften Verbinden des stromabwärtigen mit dem stromaufwärtigen Längsabschnitt der Bahn (6) aufweist.

2. Vorrichtung nach Anspruch 1, **dadurch gekennzeichnet, daß** die Entfernungs-Mittel (22) den Teilabschnitt (8) aus seiner zur Erstreckung der Bahn (6) beitragenden Feldanordnung entfernen und als Fügestation (24) zur festen Verbindung der beiderseits des Teilabschnittes (8, 9a) liegenden Feldabschnitte (7) eine Schweißeinrichtung oder eine Klebeeinrichtung umfassen, daß in Bahnlängsrichtung (10) beiderseits einer Fügeeinrichtung der Fügestation (24) Fixiermittel, wie Klemmen (42, 43), zur Festsetzung der zueinander in einer Verbindungslage ausgerichteten Feldabschnitte (7) vorgesehen sind, und daß die Fügeeinrichtung (24) einen die Bahn (6) aufnehmenden Preßspalt (49) aufweist.

3. Vorrichtung nach Anspruch 1 oder 2, **dadurch gekennzeichnet, daß** parallel zur Erstreckung (10) der Bahn (6) auf mindestens einer Seite der Fügeeinrichtung (24) ein Transporteur (41) zur gegenseitig ausgerichteten Annäherung der Feldabschnitte (7) in Richtung (10) dieser Erstreckung vorgesehen ist.

4. Vorrichtung nach einem der vorhergehenden Ansprüche, **dadurch gekennzeichnet, daß** die Entfernungsstation (2) eine Trennstation (23) zum Heraustrennen des Teilabschnittes (8) aus der Bahn (6) umfaßt, die unmittelbar benachbart zur Fügestation (24) liegt sowie zur Herstellung zweier einander zugekehrter Bahnenden (18, 19) ausgebildet ist, und daß die Steuermittel (50) ausgebildet sind den Transporteur (41) zur Überführung der Bahnenden (18, 19) in die Fügestation (24) sowie zur gegenseitigen Annäherung dieser Bahnenden zu steuern.

5. Vorrichtung nach einem der vorhergehenden Ansprüche, **dadurch gekennzeichnet, daß** ein Förderer zur Bewegung der Bahn (6) in oder durch die Entfernungsstation (2) vorgesehen ist, daß die Vorrichtung Bahnspeicher, nämlich einen Abgabespeicher (25) und einen Aufnahmespeicher (26) aufweist.

6. Vorrichtung nach einem der vorhergehenden Ansprüche, **dadurch gekennzeichnet, daß** stromauf- und/oder stromabwärts von der Entfernungsstation (2) mindestens ein Sensor (32, 33) eines Detektors zur Unterscheidung der Bahnfelder (7, 8) vorgesehen ist.

7. Vorrichtung nach einem der vorhergehenden Ansprüche, **dadurch gekennzeichnet, daß** stromauf- und/oder stromabwärts der Entfernungsstation (2) ein Pufferspeicher (34) für die Bahn (6) vorgesehen ist, der eine in Abhängigkeit von der Zugspannung der Bahn (6) radial bewegbare Pufferumlenkung (35) für die Bahn (6) aufweist.

8. Vorrichtung nach einem der vorhergehenden Ansprüche, **dadurch gekennzeichnet, daß** die Steuermittel ein Meßglied (80) für die Bahnspannung umfassen.

9. Vorrichtung nach einem der vorhergehenden Ansprüche, **dadurch gekennzeichnet, daß** auf mindestens einer Seite und im Abstand von der Entfernungsstation (2) ein Ausrichter (27 bzw. 28) zur dynamischen seitlichen Ausrichtung der Bahn (6) vorgesehen ist.

10. Vorrichtung nach einem der vorhergehenden Ansprüche, **dadurch gekennzeichnet, daß** die Entfernungsstation (2) als vormontierte Einheit (30) an dem Sockel (21) angeordnet ist, der eine einzige Sockelwange (79) und die Entfernungsstation (2) zwei einander im Abstand gegenüberliegende Stationswangen (56, 62) aufweist, von denen nur eine am Sockel (21) unmittelbar befestigt ist, und die Vorrichtung (1) beiderseits der Entfernungsstation (2) im wesentlichen symmetrisch zu einer Ebene (31) ausgebildet ist, die die Entfernungsstation (2) quer zu deren Bahnebene (3) sowie zu deren Bahn-Längserstreckung (10) durchsetzt.

11. Vorrichtung nach einem der vorhergehenden Ansprüche, **dadurch gekennzeichnet, daß** die Steuermittel eine Fluidsteuerung (70) zur Positionierung der Bahn (6) umfassen, daß die Entfernungsstation (2) auf einer Seite der Bahn (6) mindestens ein Werkzeug (47, 48; 52, 58) mit Strömungsöffnungen (71 bis 74) der Fluidsteuerung (70) aufweist, und daß vorzugsweise Mittel (64, 71, 75, 76) zur Ausschleusung des Teilabschnittes (8, 9a) quer zur Bahnebene (3) vorgesehen sind.

12. Verfahren zur Bearbeitung einer Bahn (6) aus mindestens einem Teilabschnitt (8) und an diesen anschließenden Feldabschnitten (7) als Bahnfelder, insbesondere eines Transponder-Streifens mit fehlerfreien Transponder-Einheiten als Feldabschnitte (7) und mindestens einer dazwischen liegenden fehlerhaften Transponder-Einheit als Teilabschnitt (8), wobei der Teilabschnitt (8) anschließend an einen Feldabschnitt (7) sowie parallel zur Bahn-Längserstreckung (10), als Teil dieser Erstreckung eine Kantenlänge definiert, wobei der eines der Bahnfelder bildende Teilabschnitt (8) aus seiner Feldanordnung heraustrennbar ist, **dadurch gekennzeichnet, daß** der Teilabschnitt (8) entfernt und danach die Bahn (6) als durchgehender Strang gesammelt wird, indem nach Entfernen des Teilabschnittes (8) die Bahnteile dauerhaft so verbunden werden, dass die vorher zu beiden Seiten des entfernten Teilabschnittes (8) liegenden Bahnfelder nun benachbart sind.

13. Verfahren nach Anspruch 12, **dadurch gekennzeichnet, daß** die Bahn vor dem Entfernen der Elemente (13, 14) zur Erkennung des Teilabschnittes (8) automatisch im Durchlauf abgetastet wird.

## Claims

1. An apparatus (1) for processing a web (6) comprising a string of webbed arrays in the longitudinal direction of the web, including at least one portion (8) and adjoining thereto array sections (7), more particularly a transponder strip including non-defective transponder units as array sections (7) and at least one interposed, defective transponder unit as a portion (8), said portion (8) adjoining an array section (7) as well as parallel to the linear extent (10) of said web, defining as part of this extent an edge length, said portion (8) forming one of said web sections being removable from its array arrangement, **characterized in that** said apparatus comprises on a base (21) in the region of a removal station (2) control/drive means for removing said portion (8) from said array arrangement and means (24) for durably joining the downstream to the upstream longitudinal portion of said web (6).

2. The apparatus as set forth in claim 1, **characterized in that** said removal means (22) remove said portion (8) from its array arrangement contributing towards the extent of said web (6) and as a splicing station (24) for fixedly joining said array sections (7) located on both sides of said portion (8, 9a), comprises a welding means or a bonding means, that locating means are provided in the longitudinal direction (10) of said web on both sides of a splicing means of said splicing station (24) such as pinches (42, 43) for fixedly locating said array sections (7) aligned to each other in a joining position and that said splicing station (24) comprises a press nip (49) receiving said web (6).

3. The apparatus as set forth in claim 1 or 2, **characterized in that** a transporter (41) is provided parallel to said extent (10) of said web (6) on at least one side of said splicing station (24) for mutual aligned approximation of said array sections (7) in the direction (10) of said extent.

4. The apparatus as set forth in any of the preceding claims, **characterized in that** said removal station (2) comprises a parting station (23) for separating said portion (8) from said web (6), said parting station (23) being located directly adjoining said splicing station (24) as well as being configured for producing two web ends (18, 19) facing each other and that said control means (50) are configured to control said transporter (41) for transporting said web ends (18, 19) into said splicing station (24) as well as for mutual approximation of said web ends.

5. The apparatus as set forth in any of the preceding claims, **characterized in that** a transporter for moving said web (6) into or through said removal station (2) is provided, said apparatus comprising web stores, namely a supply store (25) and a take-up store (26).

6. The apparatus as set forth in any of the preceding claims, **characterized in that** upstream and/or downstream of said removal station (2) at least one sensor (32, 33) of a detector is provided for distinguishing said web arrays (7, 8).

7. The apparatus as set forth in any of the preceding claims, **characterized in that** upstream and/or downstream of said removal station (2) a buffer store (34) is provided for said web (6), said buffer store (34) comprising for said web (6) a buffer guide (35) radially movable as a function of the tension of said web (6).

8. The apparatus as set forth in any of the preceding claims, **characterized in that** said control means comprise a sensing member (80) for sensing said web tension.

9. The apparatus as set forth in any of the preceding claims, **characterized in that** an aligner (27 or 28) for dynamic lateral alignment of said web (6) is provided on at least one side and spaced away from said removal station (2).

10. The apparatus as set forth in any of the preceding claims, **characterized in that** said removal station (2) is arranged as a preassembled unit (30) on said base (21), said base (21) comprising a sole base cheek (79) and said removal station (2) comprising two station cheeks (56, 62) opposite spaced away from each other, of which only one is directly secured to said base (21) and that said apparatus (1) is configured on both sides of said removal station (2) substantially symmetrical to a plane (31) passing through said removal station (2) transversely to said web plane (3) thereof as well as to said web linear extent (10) thereof.

11. The apparatus as set forth in any of the preceding claims, **characterized in that** said control means comprise a fluid control (70) for positioning said web (6), that said removal station (2) comprises on one side of said web (6) at least one tool (47, 48, 52, 58) with flow ports (71 to 74) of said fluid control (70) and that preferably means (64, 71, 75, 76) are provided for rejecting said portion (8, 9a) transversely to said web plane (3).

12. A method for processing a web (6) comprising at least one portion (8) and adjoining array sections (7) as webbed arrays, more particularly a transponder strip including non-defective transponder units as array sections (7) and at least one interposed, defective transponder unit as a portion (8), said portion (8) adjoining an array section (7) as well as parallel to the linear extent (10) of said web, defining as part of this extent an edge length, said portion (8) forming one of said web sections being removable from its array arrangement, **characterized in that** said portion (8) is removed and then said web (6) stringed into a full-length strip by, after removal of said portion (8), joining said web parts so durably that said web arrays previously located on both sides of said removed portion (8) are now adjoined.

13. The method as set forth in claim 12, **characterized in that** before removal of said elements (13, 14) said web is automatically scanned on the fly to detect said portion (8).

## Revendications

1. Dispositif (1) pour le traitement d'une bande (6) de zones de bande consécutives en une rangée en direction longitudinale de bande, qui comprennent au moins une section partielle (8) et à la suite de celle-ci une section de champ (7), notamment d'une bande de transpondeurs avec des unités transpondeur sans défauts en tant que sections de champ (7) et au moins une unité intermédiaire défectueuse en tant que section partielle (8), sachant que la section partielle (8) à la suite d'une section de champ (7) ainsi que parallèlement à l'étendue longitudinale de bande (10) définit, en tant que partie de cette étendue, une longueur d'arête, sachant que la section partielle (8) constituant l'un des champs de bande peut être ôté de sa disposition de champ, **caractérisé en ce que** le dispositif présente sur un socle (21), dans le domaine d'une station d'enlèvement (2), des moyens de commande ou encore d'entraînement pour l'enlèvement de la section partielle (8) de la disposition de champ et des moyens (24) pour le raccordement permanent de la section longitudinale en aval avec la section longitudinale en amont de la bande (6).

2. Dispositif d'après la revendication 1, **caractérisé en ce que** les moyens d'enlèvement (22) enlèvent la section partielle (8) de sa disposition de champ qui contribue à l'étendue de la bande (6) et qu'ils comprennent, en tant que station d'assemblage (24) pour le raccordement fixe des sections de champ (7) des deux côtés de la section partielle (8, 9a), un moyen de soudage ou un moyen de collage, **en ce qu'**en direction longitudinale de bande (10) des deux côtés d'un moyen d'assemblage de la station d'assemblage (24) on prévoit des moyens de fixation, comme des pinces (42, 43) pour l'immobilisation des sections de champ (7) disposés dans une position prévue pour l'assemblage, et **en ce que** le moyen d'assemblage (24) présente une fente de serrage (49) logeant la bande (6).

3. Dispositif d'après la revendication 1 ou 2, **caractérisé en ce que** parallèlement à l'étendue (10) de la bande (6), au moins d'un côté du moyen d'assemblage (24) est prévu un transporteur (41) pour l'approche réciproquement ajustée des sections de champ (7) en direction (10) de cette étendue.

4. Dispositif d'après une des revendications précédentes, **caractérisé en ce que** la station d'enlèvement (2) comprend une station de séparation (23) qui est prévue pour séparer la section partielle (8) de la bande (6) et qui est située à proximité immédiate de la station d'assemblage (24) ainsi qu'elle est conçue pour la réalisation de deux extrémités de bande (18, 19), et **en ce que** les moyens de commande (50) sont réalisés pour commander le transporteur (41) de manière qu'il amène les extrémités de bande (18, 19) dans la station d'assemblage (24) et qu'il approche réciproquement ces extrémités de bande.

5. Dispositif d'après une des revendications précédentes, **caractérisé en ce qu'**un convoyeur est prévu pour le déplacement de la bande (6) dans ou à travers la station d'enlèvement (2), **en ce que** le dispositif présente des réservoir de bande, c'est-à-dire un réservoir d'envoi (25) et un réservoir de logement (26).

6. Dispositif d'après une des revendications précédentes, **caractérisé en ce qu'**en amont et/ou en aval de la station d'enlèvement (2) on prévoit au moins un capteur (32, 33) d'un détecteur pour la discrimination des champs de bande (7, 8).

7. Dispositif d'après une des revendications précédentes, **caractérisé en ce qu'**en amont et/ou en aval de la station d'enlèvement (2) on prévoit un réservoir tampon (34) pour la bande (6), qui présente un moyen de renvoi tampon (35) pour la bande (6) pouvant être déplacé radialement en fonction de l'effort de traction de la bande (6).

8. Dispositif d'après une des revendications précédentes, **caractérisé en ce que** les moyens de commande comprennent un organe de mesure (80) pour la tension de la bande.

9. Dispositif d'après une des revendications précédentes, **caractérisé en ce qu'**on prévoit au moins d'un côté et à une certaine distance de la station d'enlèvement (2) un dispositif d'alignement (27 ou encore 28) pour l'alignement dynamique latéral de la bande (6).

10. Dispositif d'après une des revendications précédentes, **caractérisé en ce que** la station d'enlèvement (2) est disposée en tant que unité prémontée (30) sur le socle (21), qui présente une seule face de socle (79) et la station d'enlèvement (2) de deux faces de station (56, 62) opposées avec un certain écart, dont seulement une est fixée directement au socle (21), et que le dispositif (1) des deux côtés de la station d'enlèvement (2) est réalisé de manière essentiellement symétrique par rapport à un plan (31), qui traverse la station d'enlèvement (2) transversalement par rapport au plan de bande (3) de celle-ci ainsi que par rapport à l'étendue longitudinale de bande (10) de celle-ci.

11. Dispositif d'après une des revendications précédentes, **caractérisé en ce que** les moyens de commande comprennent une commande à fluide (70) pour le positionnement de la bande (6), **en ce que** la station d'enlèvement (2) présente d'un côté de la bande (6) au moins.un outil (47, 48 ; 52, 58) avec des ouvertures d'écoulement (de 71 à 74) de la commande à fluide (70), et **en ce qu'**on prévoit de préférence des moyens (64, 71, 75, 76) pour l'éclusage au dehors de la section partielle (8, 9a) transversalement par rapport au plan de bande (3).

12. Procédé pour le traitement d'une bande (6) composée au moins d'une section partielle (8) et de sections de champ (7), faisant la suite à celle-ci, en tant que champs de bande, notamment d'une bande de transpondeurs avec des unités transpondeur sans défauts en tant que sections de champ (7) et au moins une unité transpondeur défectueuse intermédiaire en tant que section partielle (8), sachant que la section partielle (8) définit, à la suite d'une section de champ (7) ainsi qu'en direction parallèle par rapport à l'étendue longitudinale de bande (10), en tant que partie de cette étendue, une longueur d'arête, sachant que la section partielle (8) constituant l'un des champs de bande peut être enlevé de sa disposition de champ, **caractérisé en ce que** la section partielle (8) est enlevée et que ensuite la bande (6) est collectée en tant que brin continu en raccordant de manière permanente les parties de la bande après l'enlèvement de la section partielle (8), de manière que les champs de bande situés au préalable des deux côtés de la section partielle (8) ôtée sont à présent limitrophes.

13. Procédé d'après la revendication 12, **caractérisé en ce que** pour reconnaître la section partielle (8) la bande est automatiquement scannée au passage avant l'enlèvement des éléments (13, 14).
